# EUROPÄISCHE PATENTANMELDUNG

(11) **EP 4 848 023 A1**
(43) Veröffentlichungstag der Anmeldung: **02.12.2026**
(21) Anmeldenummer: 26176419.5
(22) Anmeldetag: 05.05.2026
(51) Int. Cl.: G05D 1/224, G05D 1/698

(54) **VORRICHTUNG UND SYSTEM ZUM STEUERN VON TRANSPORTROBOTERN**

(30) Priorität: 30.05.2025 DE 102025121222
(71) Anmelder: STILL GmbH, 22113 Hamburg (DE)
(72) Erfinder: Hinckeldeyn, Johannes, 22303 Hamburg (DE); Dierfeld, Sven, 20099 Hamburg (DE); Lategahn, Julian, 44141 Dortmund (DE); Schüthe, Dennis, 21244 Buchholz (DE)
(74) Vertreter: Patentship Patentanwaltgesellschaft

(57) **Zusammenfassung**

Die Erfindung betrifft eine Datenverarbeitungsvorrichtung (110) zum Steuern einer Vielzahl von Transportrobotern (120a,b), insbesondere Flurförderzeugen (120a,b). Die Datenverarbeitungsvorrichtung (110) umfasst eine Prozessoreinrichtung (111), welche ausgebildet ist, ein Large Language Model, LLM, (111a) zu implementieren, wobei das LLM (111a) ausgebildet ist, auf der Grundlage von Benutzereingaben (310) und auf der Grundlage von über einen Zeitraum erfassten Kartendaten (320) eine visuelle Repräsentation (330) der Kartendaten (320) gemäß den Benutzereingaben (310) und/oder Steuersignale für die Vielzahl von Transportrobotern (120a,b) zu generieren. Ferner umfasst die Datenverarbeitungsvorrichtung (110) eine Kommunikationsschnittstelle (113), welche ausgebildet ist, die visuelle Repräsentation (330) der Kartendaten (320) an eine Displayvorrichtung (117) zu übermitteln, um die visuelle Repräsentation (330) der Kartendaten (320) mittels der Displayvorrichtung (117) einem Benutzer anzuzeigen und/oder die Steuersignale für die Vielzahl von Transportrobotern (120a,b) an die Vielzahl von Transportrobotern (120a,b) zu übermitteln, um die Vielzahl von Transportrobotern (120a,b) gemäß den Steuersignalen zu steuern.

## Beschreibung

Die Erfindung betrifft eine Vorrichtung und ein System zum automatisierten Steuern von Transportrobotern, insbesondere von zumindest teilautomatisierten Flurförderzeugen, in der Intralogistik, beispielsweise in einem Warenlager.

In der Intralogistik werden für den Transport und die Lagerung von Produkten, Waren und Materialien oftmals Verpackungen und/oder Ladungsträger, beispielsweise Gitterboxen oder Paletten, insbesondere Europaletten, verwendet. Zur Handhabung derartiger Verpackungen und/oder Ladungsträger in der Intralogistik, d.h. dem innerbetrieblichen Materialfluss, z.B. in einem Warenlager, werden Transportroboter, insbesondere automatisierte Flurförderzeuge, z.B. Gabelstapler, eingesetzt.

Ein Warenlager ist in der Regel ein sehr dynamisches Umfeld, in dem die teilautomatisierte oder vollautomatisierte Steuerung der mobilen Flurförderzeuge ein komplexes Problem darstellt. Dies liegt zum einen daran, dass sich automatisierte Flurförderzeuge heute nur schwierig in menschliche Arbeitsprozesse in Lagern und Fabriken integrieren lassen.

Vor diesem Hintergrund liegt der vorliegenden Erfindung die Aufgabe zu Grunde, eine verbesserte Vorrichtung sowie ein verbessertes System zum automatisierten Steuern von Transportrobotern, insbesondere von zumindest teilautomatisierten Flurförderzeugen, in der Intralogistik, beispielsweise in einem Warenlager, bereitzustellen.

Diese Aufgabe wird gemäß einem ersten Aspekt der Erfindung durch eine nachstehend näher beschriebene Datenverarbeitungsvorrichtung zum Steuern von Transportrobotern, insbesondere von zumindest teilautomatisierten Flurförderzeugen, in der Intralogistik, beispielsweise in einem Warenlager gelöst. Die Datenverarbeitungsvorrichtung gemäß dem ersten Aspekt kann als eine externe Servervorrichtung ausgebildet sein, welche mit der Vielzahl von Transportrobotern kommuniziert.

Die Datenverarbeitungsvorrichtung gemäß dem ersten Aspekt umfasst eine Prozessoreinrichtung, welche ausgebildet ist, ein künstliches neuronales Netzwerk in Form eines Large Language Models, LLMs, zu implementieren, wobei das LLM ausgebildet ist, auf der Grundlage von Benutzereingaben und auf der Grundlage von über einen Zeitraum erfassten Kartendaten eine visuelle Repräsentation der Kartendaten gemäß den Benutzereingaben und/oder Steuersignale für die Vielzahl von Transportrobotern zu generieren. Ferner umfasst die Datenverarbeitungsvorrichtung gemäß dem ersten Aspekt eine Kommunikationsschnittstelle, welche ausgebildet ist, die visuelle Repräsentation der Kartendaten, beispielsweise eine zwei- oder dreidimensionale Karte, an eine Displayvorrichtung zu übermitteln, um die visuelle Repräsentation der Kartendaten mittels der Displayvorrichtung einem Benutzer anzuzeigen und/oder die Steuersignale für die Vielzahl von Transportrobotern an die Vielzahl von Transportrobotern zu übermitteln, um die Vielzahl von Transportrobotern gemäß den Steuersignalen zu steuern.

Die Kartendaten stellen bevorzugt 3D-Karten, einen sogenannten digitalen Zwilling, eines Intralogistikbereichs, beispielsweise eines Lagerbereichs, insbesondere eines Lagerhauses oder eines Warenlagers, dar.

Gemäß einer Ausführungsform kann die Datenverarbeitungsvorrichtung die Displayvorrichtung zum Anzeigen der visuellen Repräsentation der Kartendaten umfassen.

In einer Ausführungsform ist das LLM als Orchestrator ausgebildet, wobei der Orchestrator ausgebildet ist, auf der Grundlage der Benutzereingaben und auf der Grundlage der über einen Zeitraum erfassten Kartendaten aus einer Vielzahl von Modulen zum Verarbeiten der Kartendaten dynamisch wenigstens ein Modul zum Verarbeiten der Kartendaten auszuwählen, wobei das wenigstens eine Modul zum Verarbeiten der Kartendaten ausgebildet ist, die visuelle Repräsentation der Kartendaten gemäß den Benutzereingaben und/oder die Steuersignale für die Vielzahl von Transportrobotern zu generieren.

Gemäß einer Ausführungsform ist die Kommunikationsschnittstelle ferner ausgebildet, von einer Vielzahl von Sensoreinheiten die Kartendaten und/oder Sensordaten zu empfangen, wobei die Prozessoreinrichtung ausgebildet ist, die Kartendaten auf der Grundlage der Sensordaten zu generieren.

In einer Ausführungsform umfassen die Kartendaten und/oder Sensordaten Radar- und/oder Lidar-Punktwolke-Daten und/oder Bilddaten.

Gemäß einer Ausführungsform ist das LLM ausgebildet, die Steuersignale für die Vielzahl von Transportrobotern auf der Grundlage der Benutzereingaben, auf der Grundlage der Kartendaten und auf der Grundlage einer Vielzahl von Transportaufträgen der Vielzahl von Transportrobotern zu generieren.

In einer Ausführungsform sind die Vielzahl von Transportrobotern ausgebildet, eine Vielzahl von Waren zu transportieren, wobei das LLM ausgebildet ist, auf der Grundlage der Kartendaten einen oder mehrere Pufferbereiche für die Zwischenlagerung der Vielzahl von Waren zu bestimmen und die Steuersignale für die Vielzahl von Transportrobotern auf der Grundlage des einen oder mehreren Pufferbereiche für den Transport der Vielzahl von Waren zu generieren.

Gemäß einer Ausführungsform sind die Vielzahl von Transportrobotern ausgebildet, eine Vielzahl von Waren zu transportieren, wobei das LLM ausgebildet ist, auf der Grundlage der Kartendaten einen oder mehrere Startbereiche und/oder einen oder mehrere Zielbereiche für die Vielzahl von Waren zu bestimmen und die Steuersignale für die Vielzahl von Transportrobotern auf der Grundlage des einen oder der mehreren Startbereiche und/oder des einen oder der mehreren Zielbereiche für den Transport der Vielzahl von Waren zu generieren.

In einer Ausführungsform ist das LLM ausgebildet, auf der Grundlage der Kartendaten einen oder mehrere Gefahrenbereiche für die Vielzahl von Transportrobotern zu bestimmen und die Steuersignale für die Vielzahl von Transportrobotern auf der Grundlage des einen oder der mehreren Gefahrenbereiche für die Vielzahl von Transportrobotern zu generieren.

Gemäß einem zweiten Aspekt der Erfindung wird die vorstehend genannte Aufgabe durch ein nachstehend näher beschriebenes System zum Betreiben einer Vielzahl von Transportrobotern gelöst. Das System gemäß dem zweiten Aspekt umfasst eine Vielzahl von Transportrobotern, insbesondere von zumindest teilautomatisierten Flurförderzeugen, sowie eine Datenverarbeitungsvorrichtung gemäß dem ersten Aspekt der Erfindung, beispielsweise in Form einer Servervorrichtung, zum Steuern der Vielzahl von Transportrobotern, beispielsweise in einem Warenlager.

In einer Ausführungsform umfasst jeder der Vielzahl von Transportrobotern eine oder mehrere Sensoreinheiten, welche ausgebildet sind, zumindest einen Teil der Vielzahl von Sensordaten zu erfassen.

In einer Ausführungsform umfasst die Vielzahl von Transportrobotern ein oder mehrere Flurförderzeuge, insbesondere einen oder mehrere Gabelstapler.

Weitere Vorteile und Einzelheiten der Erfindung werden beispielhaft anhand der in den schematischen Figuren dargestellten Ausführungsbeispiele näher erläutert. Hierbei zeigt:
Figur 1 eine schematische Darstellung eines erfindungsgemäßen Systems mit einer Datenverarbeitungsvorrichtung zum Steuern einer Vielzahl von Transportrobotern zum Transport von Warenobjekten in einem Warenlager gemäß einer Ausführungsform;
Figur 2 eine schematische Darstellung eines Flurförderzeugs zum Transport von Warenobjekten in einem Warenlager gemäß einer Ausführungsform; und
Figur 3 eine schematische Darstellung von Komponenten einer Datenverarbeitungsvorrichtung zum Steuern einer Vielzahl von Transportrobotern zum Transport von Warenobjekten in einem Warenlager gemäß einer Ausführungsform.

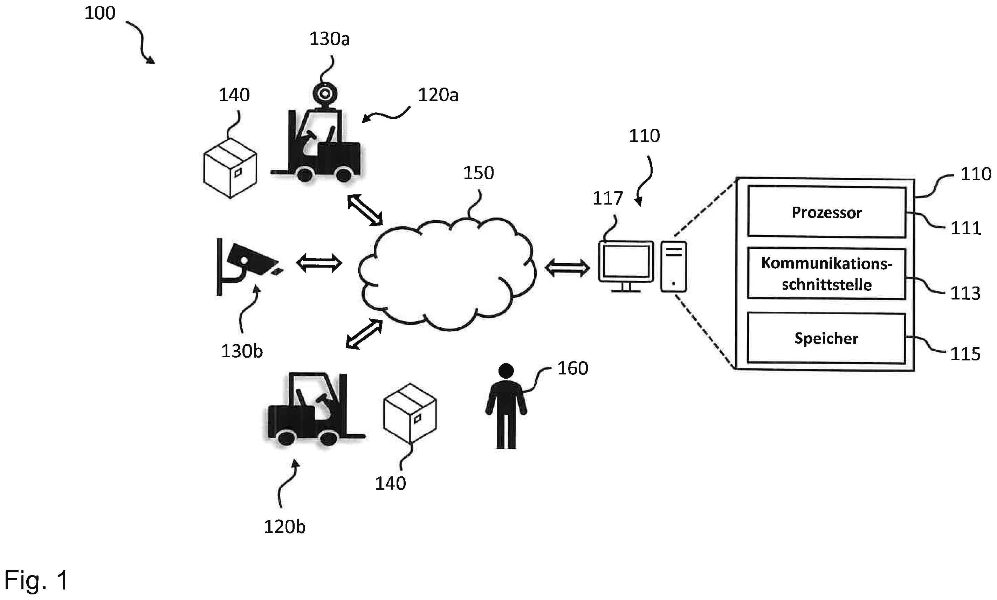

Figur 1 zeigt eine schematische Darstellung eines erfindungsgemäßen Systems 100 mit einer erfindungsgemäßen Datenverarbeitungsvorrichtung 110 zum Steuern einer Vielzahl von zumindest teilweise automatisiert betreibbaren Transportrobotern 120a,b in Form von mobilen Flurförderzeugen 120a,b, beispielsweise einem Gabelstapler oder einem Picker in einem industriellen Umfeld, insbesondere in einem Warenlager mit einer Vielzahl von Warenobjekten und/oder Ladungsträgern 140, beispielsweise Paletten 140, wobei sich in dem Warenlager auch Personen 160 befinden können. Bei der in Figur 1 dargestellten Datenverarbeitungsvorrichtung 110 kann es sich beispielsweise um einen Industrie-PC 110 oder einen Cloud-Server, insbesondere einen Edge-Cloud-Server 110 handeln.

Wie in der Figur 1 dargestellt, umfasst die Datenverarbeitungsvorrichtung 110 einen Prozessor 111, eine Kommunikationsschnittstelle 113 und einen, insbesondere nichtflüchtigen, Speicher 115. Der Speicher 115 kann ausgebildet sein, Daten und ausführbaren Programmcode zu speichern, der, wenn von dem Prozessor 111 der Datenverarbeitungsvorrichtung 110 ausgeführt, den Prozessor 111 veranlasst, die im Folgenden beschriebenen Funktionen, Operationen und Verfahren durchzuführen. Ferner kann die Datenverarbeitungsvorrichtung 110 eine Displayvorrichtung 117, d.h. einen Bildschirm 117 zum Anzeigen von visuellen Informationen umfassen.

Wie in Figur 1 dargestellt, umfasst das System 100 ferner eine Vielzahl von Sensoren 130a,b, welche ausgebildet sind, Sensordaten in dem Warenlager und der Umgebung der Vielzahl von Transportrobotern 120a,b, insbesondere mobilen Flurförderzeugen 120a,b zu erfassen und an die Datenverarbeitungsvorrichtung 110 zu übertragen. Die Vielzahl von Sensoren 130a,b können eine Vielzahl von bildgebenden Sensoren, insbesondere Kameras 130a,b umfassen, die in dem industriellen Umfeld, insbesondere dem Warenlager und/oder an der Vielzahl von mobilen Flurförderzeugen 120a und/oder Transportrobotern angebracht sind. Alternativ oder zusätzlich können die Vielzahl von Sensoren z.B. an den Flurförderzeugen montierten Radar- und/oder Lidar-Sensoren oder auch Mikrofone zur Erfassung von akustischen Daten, beispielsweise Spracheingaben bzw. Sprachsignalen umfassen.

In einer Ausführungsform ist die Kommunikationsschnittstelle 113 der Datenverarbeitungsvorrichtung 110 ausgebildet, drahtlos und/oder drahtgebunden die Vielzahl von Sensordaten von den Sensoren 130a,b zu empfangen und/oder mit den Transportrobotern bzw. mobilen Flurförderzeugen 120a,b und/oder zu kommunizieren. Beispielsweise kann die Kommunikationsschnittstelle 113 der Datenverarbeitungsvorrichtung 110 ausgebildet sein, über ein Kommunikationsnetzwerk, z.B. ein WLAN, 5G-Netzwerk und/oder das Internet 150 die Vielzahl von Sensordaten von den Sensoren 130a,b zu empfangen und/oder mit den Transportrobotern bzw. mobilen Flurförderzeugen 120a,b zu kommunizieren, um Daten auszutauschen.

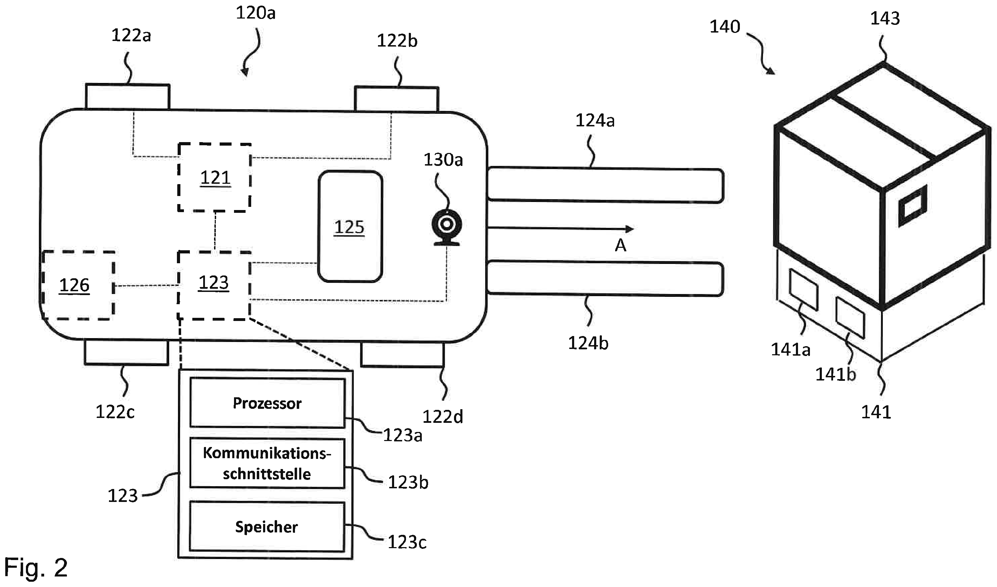

Figur 2 zeigt eine schematische Darstellung eines Transportroboters 120a in Form eines Flurförderzeugs 120a gemäß einer Ausführungsform zum Transportieren von Warenobjekten 140 in einem industriellen Umfeld, insbesondere einem Warenlager. Bei dem Transportroboter 120a in Form eines Flurförderzeugs 120a kann es sich insbesondere um einen zeitweise autonom, teil-autonom und/oder manuell betreibbaren, d.h. von einem Bediener geführten Gabelstapler 120a handeln. Bei den Warenobjekten 140 kann es sich beispielsweise um Waren 143, wie Verpackungskartons 143, handeln, welche auf einem jeweiligen Ladungsträger 141 angeordnet sind. Bei dem Ladungsträger 141 kann es sich beispielsweise um eine Palette 141, insbesondere eine Euro-Palette 141, oder eine Gitterbox 141 handeln.

Wie in Figur 2 dargestellt, kann das Flurförderzeug 120a ein Lastaufnahmemittel in Form eines Paares von Lastgabeln 124a,b umfassen, welche ausgebildet sind, in jeweilige Aussparungen, insbesondere Taschen 141a,b an einer Stirnseite des Ladungsträgers 141 eingebracht zu werden, um den Ladungsträger 141 sowie die darauf angeordnete Ware 143 aufzunehmen. Gemäß weiteren Ausführungsformen kann das Lastaufnahmemittel auch als Dorn beispielsweise für die Aufnahme von Folienrollen oder Drahtcoils, als unterhakendes Lastaufnahmemittel (z. B. vergleichbar mit Müllfahrzeugen zur Aufnahme der Mülltonnen), oder als Ballen- und Rollenklammern beispielsweise zur Aufnahme von Papierrollen ausgebildet sein.

Das in Figur 2 dargestellte Flurförderzeug 120a umfasst ferner eine Antriebseinheit 121, beispielsweise wenigstens einen Motor 121, insbesondere einen batteriebetriebenen Elektromotor 121, wobei die Antriebseinheit 121 ausgebildet ist, den Transportroboter 120a in Form eines Flurförderzeugs 120a und das Paar von Lastgabeln 124a,b relativ zu dem Warenobjekt 140 zu bewegen, um beispielsweise die Orientierung und/oder den Abstand zwischen dem Flurförderzeug 120a und dem Warenobjekt 140, insbesondere dem Ladungsträger 141 zu ändern und/oder das Paar von Lastgabeln 124a,b anzuheben oder abzusenken. Zu diesem Zweck kann, wie in Figur 2 angedeutet, die Antriebseinheit 121 geeignet mit Rädern 122a-d und/oder dem Paar von Lastgabeln 124a,b des Flurförderzeugs 120a verbunden sein. Das Flurförderzeug 120a kann ferner ein Anzeige- und/oder Bedienfeld 125 zur Anzeige von Informationen und/oder zum Bedienen des Flurförderzeugs 120a umfassen.

Das Flurförderzeug 120a kann ferner eine oder mehrere Sensoreinheiten 130a zur Erfassung von Sensordaten umfassen, welche Informationen über die aktuelle Umgebung des Flurförderzeugs 120a enthalten. In einer Ausführungsform können die Sensoreinheiten 130a, eine Bilderfassungseinheit, insbesondere eine Kamera, einen Radar-Sensor und/oder einen Lidar-Sensor umfassen, welche ausgebildet sind, bei der Bewegung des Flurförderzeugs 120a eine Vielzahl von Bilddaten, Radardaten und/oder Lidardaten der Umgebung des Flurförderzeugs 120a zu erfassen. Ferner kann das Flurförderzeug 120a eine Sensoreinheit 130a in Form eines Mikrofons aufweisen, welches ausgebildet sein kann, Spracheingaben zu erfassen.

Wie in Figur 2 angedeutet, kann die Sensoreinheit 130a beispielsweise in Form einer Bilderfassungseinheit 130a vorzugsweise derart an dem Flurförderzeug 120a montiert sein, dass ein Blickfeld 131a der Bilderfassungseinheit 130a im Wesentlichen entlang einer Vorwärtsbewegungsrichtung A des Flurförderzeugs 120a liegt. Vorzugsweise kann die Bilderfassungseinheit 130a in der Symmetrieebene zwischen den zwei Lastgabeln 124a,b montiert sein. Neben der Bilderfassungseinheit 130a mit dem Blickfeld entlang der Vorwärtsbewegungsrichtung A des Flurförderzeugs 120a kann das Flurförderzeug 120a noch weitere Sensoreinheiten umfassen, beispielsweise eine Sensoreinheit mit einem Blickfeld entlang einer Rückwärtsbewegungsrichtung des Flurförderzeugs 120a und/oder eine Sensoreinheit mit einem Blickfeld senkrecht zu der Vorwärtsbewegungsrichtung A des Flurförderzeugs 120a.

Erfindungsgemäß umfasst das Flurförderzeug 120a ferner eine Steuereinheit 123, welche beispielsweise einen oder mehrere Prozessoren oder Mikro-Controller 123a mit geeigneter Software umfassen kann und ausgebildet ist, das Flurförderzeug 120a zumindest teilweise automatisiert zu steuern. Wie in der Figur 2 dargestellt, kann die Steuereinheit 123 ferner eine Kommunikationsschnittstelle 123b sowie einen, insbesondere nichtflüchtigen, Speicher 123c aufweisen. Der Speicher 123c kann ausgebildet sein, Daten und ausführbaren Programmcode zu speichern, der, wenn von dem Prozessor 123a der Steuereinheit 123 ausgeführt, den Prozessor 123a veranlasst, die im Folgenden beschriebenen Funktionen, Operationen und Verfahren durchzuführen. Das Flurförderzeug 120a umfasst ferner eine Kommunikationsschnittstelle 126, welche ausgebildet, über ein drahtloses Kommunikationsnetzwerk, beispielsweise ein Mobilfunknetzwerk oder ein WLAN, mit der Datenverarbeitungsvorrichtung 110 zu kommunizieren, um beispielsweise Steuersignale von der Datenverarbeitungsvorrichtung 110 zum Steuern des Flurförderzeugs 120a zu empfangen.

Wie bereits vorstehend im Zusammenhang mit Figur 1 beschrieben, ist die Kommunikationsschnittstelle 113 der Datenverarbeitungsvorrichtung 110 ausgebildet, eine Vielzahl von Sensordaten zu empfangen, welche Informationen über die aktuelle Umgebung des Flurförderzeugs 120a enthalten. In einer Ausführungsform können die Sensordaten insbesondere in der Umgebung des Flurförderzeugs 120a erfasste Bilddaten oder Radar- bzw. Lidar-Daten umfassen, welche in Form einer Punktwolke vorliegen. Die Sensordaten können zumindest teilweise von der Sensoreinheit 130a des Flurförderzeugs 120a erfasst werden und an die Datenverarbeitungsvorrichtung 110 übertragen werden.

Die Sensordaten der Sensoren 130a, 130b dienen dazu, auf Grundlage der Sensordaten der Sensoren 130a, 130b Kartendaten, insbesondere 3D-Karten, einen sogenannten digitalen Zwilling, eines Intralogistikbereichs, beispielsweise eines Lagerbereichs, insbesondere eines Lagerhauses oder eines Warenlagers, zu generieren.

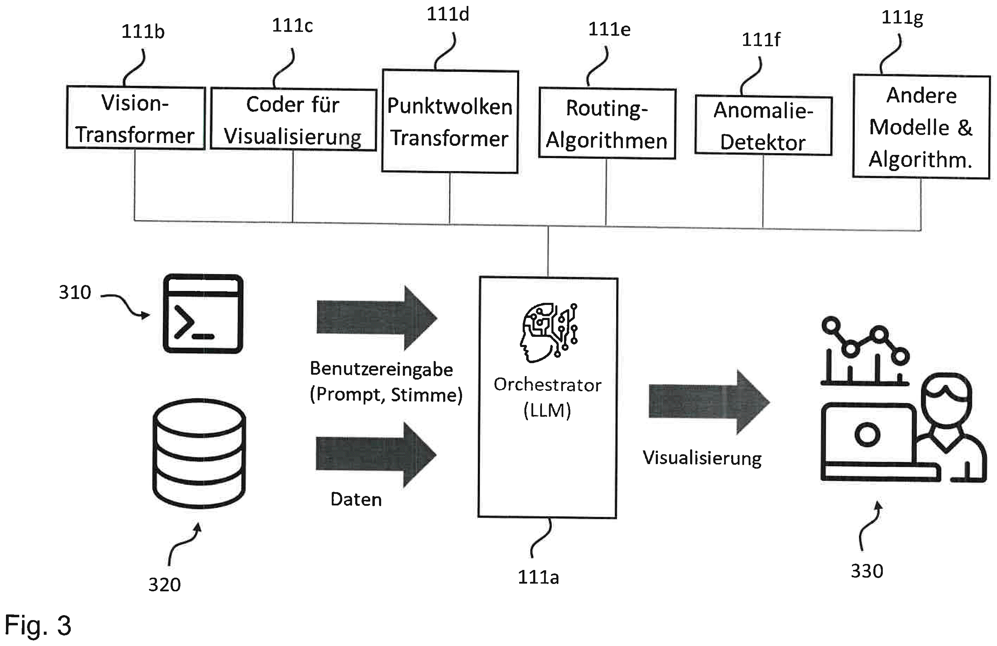

Wie dies nachstehend im Detail im Zusammenhang mit Figur 3 beschrieben wird, ist die Prozessoreinrichtung 111 der Datenverarbeitungsvorrichtung 110 ausgebildet, ein künstliches neuronales Netzwerk in Form eines Large Language Models, LLMs, 111a zu implementieren. Dabei ist das LLM 111a ausgebildet, auf der Grundlage von Benutzereingaben 310 und auf der Grundlage von über einen Zeitraum erfassten Kartendaten 320 eine visuelle Repräsentation, d.h. eine Visualisierung 330 der Kartendaten 320 gemäß den Benutzereingaben 310 und/oder Steuersignale für die Vielzahl von Transportrobotern 120a,b zu generieren. Die Kommunikationsschnittstelle 113 der Datenverarbeitungsvorrichtung 110 ist ausgebildet, die visuelle Repräsentation, d.h. die Visualisierung 330 der Kartendaten 320 an die Displayvorrichtung 117 zu übermitteln, um die visuelle Repräsentation 330 der Kartendaten 320 mittels der Displayvorrichtung 117 einem Benutzer anzuzeigen und/oder die Steuersignale für die Vielzahl von Transportrobotern 120a,b an die Vielzahl von Transportrobotern 120a,b zu übermitteln, um die Vielzahl von Transportrobotern 120a,b gemäß den Steuersignalen zu steuern.

Wie dies dem Fachmann bekannt ist, handelt es sich bei einem LLM um ein Transformer-basiertes KI-Modell, welches Befehle in natürlicher Sprache, d.h. die Benutzereingaben 310 aber auch Daten aus unterschiedlichen Datenquellen, d.h. die Kartendaten 320 interpretieren und so eigenständig gestellte Aufgaben bearbeiten können.

In der in Figur 3 dargestellten Ausführungsform ist das LLM 111a in Form eines Orchestrators 111a ausgebildet, welcher ausgebildet ist, auf der Grundlage der Benutzereingaben 310 und auf der Grundlage der über einen Zeitraum erfassten Kartendaten 320 aus einer Vielzahl von Modulen 111b-g zum Verarbeiten der Kartendaten 320 dynamisch wenigstens ein Modul 111b-g zum Verarbeiten der Kartendaten 320 auszuwählen, wobei das wenigstens eine Modul 111b-g zum Verarbeiten der Kartendaten 320 ausgebildet ist, um die visuelle Repräsentation 330 der Kartendaten 320 gemäß den Benutzereingaben 310 und/oder die Steuersignale für die Vielzahl von Transportrobotern 120a,b zu generieren. Mit anderen Worten: bei der in Figur 3 dargestellten Ausführungsform ist der von dem LLM 111a gebildete Orchestrator 111a ausgebildet, die für die Weiterverarbeitung und/oder Bewertung der Kartendaten erforderlichen Module und/oder Algorithmen auszuwählen, um weitere Verarbeitungsschritte mit den Kartendaten bzw. Sensordaten vornehmen zu können.

Zur Auswertung der Kartendaten, beispielsweise der 3D-Karten, des Intralogistikbereichs wird somit das LLM 111a eingesetzt, das als Orchestrator 111a Benutzereingaben 310, beispielsweise Texteingaben, Spracheingaben, Bildeingaben oder Zeichnungen, und die Kartendaten 320 entgegennimmt, und entsprechend der Benutzereingabe 310 die visuelle Repräsentation 330 als eine Visualisierung generiert. Dies geschieht mit Hilfe der Vielzahl von Modulen 111b-g, die dynamisch, je nach Anforderung vom LLM 111a hinzugezogen werden.

Beispielsweise kann das LLM 111a, wie in Figur 3 dargestellt, ein Visio-Transformer-Modul 111b, ein Coder-Modul 111c für die Visualisierung, ein Punktwolken-Transformer-Modell 111d, ein Routing-Algorithmus-Modul 111e, ein Anomalie-Detektor-Modul 111f und/oder weitere Module 111g zum Verarbeiten der Kartendaten bzw. Sensordaten 320 auswählen. Wie bereits vorstehend beschrieben, kann die Prozessoreinrichtung der Datenverarbeitungsvorrichtung 110 ausgebildet sein, die Kartendaten auf der Grundlage der von den Sensoreinheiten 130a,b erfassten Sensordaten zu generieren. Bei der in den Figuren 3 dargestellten Ausführungsform kann das LLM 111a oder eines der Module 111b-g zum Verarbeiten der Kartendaten bzw. Sensordaten 320 ausgebildet sein, eine der folgenden Funktionen auszuführen: Finden, Zählen und Visualisieren von Objekten in den Kartendaten 320; Ableiten von geometrischen Maßen, wie Abständen oder Flächen, in den Kartendaten 320; und /oder Identifikation von Objektbewegungen und Materialflüssen.

In einer Ausführungsform kann das LLM 111a Teil eines Warenmanagementsystems sein oder mit einem solchen interagieren, um Transportaufträge von einem Startort zu einem Zielort für die Vielzahl von Transportrobotern 120a,b zu generieren oder zu empfangen. In einer Ausführungsform ist das LLM 111a ausgebildet, die Steuersignale für die Vielzahl von Transportrobotern auf der Grundlage der Benutzereingaben, auf der Grundlage der Kartendaten und auf der Grundlage der Vielzahl von Transportaufträgen der Vielzahl von Transportrobotern 120a,b zu generieren.

In einer Ausführungsform ist das LLM 111a ausgebildet, auf der Grundlage der Kartendaten 320 einen oder mehrere Pufferbereiche für die Zwischenlagerung der Vielzahl von Waren 140a,b zu bestimmen und die Steuersignale für die Vielzahl von Transportrobotern 120a,b auf der Grundlage des einen oder der mehreren Pufferbereiche für den Transport der Vielzahl von Waren 140a,b zu generieren. Dies erlaubt eine quantitative Analyse und Auswertung von freien Pufferflächen in einem Lager, d.h. in der Kartendaten werden vom LLM 111a freie Pufferflächen gesucht, ausgemessen, und mit einer Ortsangabe versehen. Diese Informationen können von einem Warenmanagementsystem zum Steuern der Transportroboter 120a,b verwendet werden. Somit können aufgrund dieser Informationen die Waren und Lagergüter 140 dynamisch zwischengelagert werden, z.B. in einem Wareneingang. Weiterhin können die verfügbaren Pufferflächen statistisch ausgewertet werden (z.B. Auslastungsgrad im Zeitverlauf) und können dem Logistikplaner in seinem Materialflussplanungswerkzeug angezeigt werden. Damit werden die Tätigkeiten von Logistikplanern und Disponenten effizienter.

In einer Ausführungsform ist das LLM 111a ausgebildet, auf der Grundlage der Kartendaten einen oder mehrere Startbereiche und/oder einen oder mehrere Zielbereiche für den Transport der Vielzahl von Waren zu bestimmen und die Steuersignale für die Vielzahl von Transportrobotern auf der Grundlage des einen oder der mehreren Startbereiche und/oder des einen oder der mehreren Zielbereiche für den Transport der Vielzahl von Waren zu generieren, was eine räumlich-zeitliche Analyse von Lagerorten und Materialverwendung zur Reduzierung von Wegezeiten ermöglicht. Hierzu können die Verwendungsdaten (z.B. Verbrauch) von Lagerobjekten aus einem Warenmanagementsystem mit den Lager- und Verwendungsorten, d.h. der Startbereichen und den Zielbereichen der Objekte aus einer 3D-Karte kombiniert werden. Je häufiger ein Lagerobjekt verwendet wird, desto näher sollte das Objekt am Ort seiner Verwendung gelagert werden, um Wegezeiten zu sparen. Die Kombination und Auswertung der dafür notwendigen Daten kann anhand dieser Ausführungsform einfacher durch den Logistikplaner geschehen.

In einer Ausführungsform ist das LLM 111a ausgebildet, auf der Grundlage der Kartendaten einen oder mehrere Gefahrenbereiche für die Vielzahl von Transportrobotern zu bestimmen und die Steuersignale für die Vielzahl von Transportrobotern auf der Grundlage des einen oder der mehreren Gefahrenbereiche für die Vielzahl von Transportrobotern 120a,b zu generieren. Hieraus können Verbesserungsvorschläge zur Reduzierung von Gefahrenpotenzialen bei dem Transport der Waren bzw. Lagergüter 140 abgeleitet werden. Dazu können vom LLM 111a zunächst Gefahrenstellen erkannt werden, an denen es besonders häufig zu Begegnungssituationen von Personen und Transportrobotern 120a,b untereinander kommt (z.B. Kreuzung). Diese Bereiche werden besonders in der Visualisierung dargestellt und dann mit Transportaufträgen aus dem Warenmanagementsystem kombiniert, um Gefahrensituationen durch Begegnungen zu reduzieren.

Wie dies der Fachmann erkennt, ermöglicht die Verwendung des LLM 111a als Orchestrator den Einsatz von Analyse- und Planungswerkzeugen ohne eine konkrete Fachkenntnis von Algorithmen, Programmiersprachen oder Software-Paketen. Durch die Verwendung natürlicher Sprache als Eingabeparameter, d.h. Benutzereingabe 310, wird einem größeren Nutzerkreis (siehe Beispiele oben) der Zugang zu den entsprechenden Auswertungen ermöglicht. Zudem können die an den Orchestrator 111a angebundenen Ressourcen (Daten) über Programmierschnittstellen (API) durch den Orchestrator 111a angesprochen werden. Der Orchestrator 111a kann eine oder mehrere dieser Ressourcen nutzen, um die Benutzeranfrage 310 aufzunehmen und eine entsprechende Analyse durchzuführen. Dafür werden die verschiedenen Ressourcen bei Bedarf entsprechend sinnvoll miteinander kombiniert. Beispielsweise können bei der Visualisierung der Materialbewegungen die folgenden Schritte durchgeführt werden: (1) Vorverarbeitung der Kartendaten 320 in Form einer Punktewolke durch Entfernen dynamischer Objekte, (2) semantische Segmentierung aller Ladungsträger in der Punktewolke, (3) Instanzsegmentierung der einzelnen Ladungsträger anhand der Kamerabilder und Bestimmung der jeweiligen Positionen zu einem Zeitpunkt, (4) Durchführung der Punkte (1) bis (3) über mehrere Datensätze bzw. Zeitpunkte hinweg, (5) Ablage der Zeitreihenanalyse in einer Datenbank und (6) Visualisierung der Ladungsträgerbewegungen als Vektoren innerhalb einer Karte. Der Workflow zur Durchführung dieser und anderer Analysen kann anhand des Orchestrators 111a situativ und flexibel bei Bedarf neu zusammengestellt und ausgeführt werden. Dabei brauchen Benutzer des Orchestrators 111a kein vertieftes Fachwissen in Bezug auf Algorithmen, Programmiersprachen und Softwarepakete zur Auswertung von Kartendaten. Die Auswertung von Kartendaten anhand von natürlicher Sprache wird möglich.

Einzelne Workflows zur Durchführung von Datenauswertungen von Kartendaten müssen nicht manuell durch Entwickler konzeptioniert und implementiert werden. Durch den Orchestrator 111a können situativ und flexibel Auswertungen neugestaltet werden, indem diese Ressourcen modular anders kombiniert und in eine neue Reihenfolge gebracht werden. Dadurch reduziert sich der manuelle Entwicklungsaufwand für einzelne Auswerte-Workflows und gleichzeitig erhöht sich das Spektrum an verfügbaren Auswertungen. Zusätzlich lassen sich Zusammenhänge und Verständnis von Zuständen in einem Warenlager deutlich besser, gegenüber herkömmlichen Objektdetektoren, vom LLM 111a interpretieren. Zum Beispiel können Gabelstapler 120a,n nicht nur erkannt werden, sondern es kann auch mittels einfacher Nutzereingabe (Prompts) analysiert werden, ob dieser eine Gefahr darstellt, zum Beispiel aufgrund seiner Geschwindigkeit oder hochgefahrenen Gabeln.

## Patentansprüche

1. Datenverarbeitungsvorrichtung (110) zum Steuern einer Vielzahl von Transportrobotern (120a,b), insbesondere Flurförderzeugen (120a,b), wobei die Datenverarbeitungsvorrichtung (110) umfasst:
eine Prozessoreinrichtung (111), welche ausgebildet ist, ein Large Language Model, LLM, (111a) zu implementieren, wobei das LLM (111a) ausgebildet ist, auf der Grundlage von Benutzereingaben (310) und auf der Grundlage von über einen Zeitraum erfassten Kartendaten (320) eine visuelle Repräsentation (330) der Kartendaten (320) gemäß den Benutzereingaben (310) und/oder Steuersignale für die Vielzahl von Transportrobotern (120a,b) zu generieren; und
eine Kommunikationsschnittstelle (113), welche ausgebildet ist, die visuelle Repräsentation (330) der Kartendaten (320) an eine Displayvorrichtung (117) zu übermitteln, um die visuelle Repräsentation (330) der Kartendaten (320) mittels der Displayvorrichtung (117) einem Benutzer anzuzeigen und/oder die Steuersignale für die Vielzahl von Transportrobotern (120a,b) an die Vielzahl von Transportrobotern (120a,b) zu übermitteln, um die Vielzahl von Transportrobotern (120a,b) gemäß den Steuersignalen zu steuern.

2. Datenverarbeitungsvorrichtung (110) nach Anspruch 1, wobei die Datenverarbeitungsvorrichtung (110) die Displayvorrichtung (117) zum Anzeigen der visuellen Repräsentation (330) der Kartendaten (320) umfasst.

3. Datenverarbeitungsvorrichtung (110) nach Anspruch 1 oder 2, wobei das LLM (111a) als Orchestrator (111a) ausgebildet ist, wobei der Orchestrator (111a) ausgebildet ist, auf der Grundlage der Benutzereingaben (310) und auf der Grundlage der über einen Zeitraum erfassten Kartendaten (320) aus einer Vielzahl von Modulen (111b-g) zum Verarbeiten der Kartendaten (320) dynamisch wenigstens ein Modul (111b-g) zum Verarbeiten der Kartendaten auszuwählen, wobei das wenigstens eine Modul (111b-g) zum Verarbeiten der Kartendaten (320) ausgebildet ist, die visuelle Repräsentation (330) der Kartendaten (320) gemäß den Benutzereingaben (310) und/oder die Steuersignale für die Vielzahl von Transportrobotern (120a,b) zu generieren.

4. Datenverarbeitungsvorrichtung (110) nach einem der vorhergehenden Ansprüche, wobei die Kommunikationsschnittstelle (113) ferner ausgebildet ist, von einer Vielzahl von Sensoreinheiten (130a,b) die Kartendaten (320) und/oder Sensordaten zu empfangen, wobei die Prozessoreinrichtung (111) ausgebildet ist, die Kartendaten (320) auf der Grundlage der Sensordaten zu generieren.

5. Datenverarbeitungsvorrichtung (110) nach Anspruch 4, wobei die Kartendaten (320) und/oder Sensordaten Radar- und/oder Lidar-Punktwolke-Daten und/oder Bilddaten umfassen.

6. Datenverarbeitungsvorrichtung (110) nach einem der vorhergehenden Ansprüche, wobei das LLM (111a) ausgebildet ist, die Steuersignale für die Vielzahl von Transportrobotern (120a,b) auf der Grundlage der Benutzereingaben (310), auf der Grundlage der Kartendaten (320) und auf der Grundlage einer Vielzahl von Transportaufträgen der Vielzahl von Transportrobotern (120a,b) zu generieren.

7. Datenverarbeitungsvorrichtung (110) nach einem der vorhergehenden Ansprüche, wobei die Vielzahl von Transportrobotern (120a,b) ausgebildet sind, eine Vielzahl von Waren (140a,b)zu transportieren, und wobei das LLM (111a) ausgebildet ist, auf der Grundlage der Kartendaten (320) einen oder mehrere Pufferbereiche für die Zwischenlagerung der Vielzahl von Waren (140a,b) zu bestimmen und die Steuersignale für die Vielzahl von Transportrobotern (120a,b) auf der Grundlage des einen oder der mehreren Pufferbereiche für den Transport der Vielzahl von Waren (140a,b) zu generieren.

8. Datenverarbeitungsvorrichtung (110) nach einem der vorhergehenden Ansprüche, wobei die Vielzahl von Transportrobotern (120a,b) ausgebildet sind, eine Vielzahl von Waren (140a,b) zu transportieren, und wobei das LLM (111a) ausgebildet ist, auf der Grundlage der Kartendaten (320) einen oder mehrere Startbereiche und/oder einen oder mehrere Zielbereiche für die Vielzahl von Waren (140a,b) zu bestimmen und die Steuersignale für die Vielzahl von Transportrobotern (120a,b) auf der Grundlage des einen oder der mehreren Startbereiche und/oder des einen oder der mehreren Zielbereiche für den Transport der Vielzahl von Waren (140a,b) zu generieren.

9. Datenverarbeitungsvorrichtung (110) nach einem der vorhergehenden Ansprüche, wobei das LLM (111a) ausgebildet ist, auf der Grundlage der Kartendaten (320) einen oder mehrere Gefahrenbereiche für die Vielzahl von Transportrobotern (120a,b) zu bestimmen und die Steuersignale für die Vielzahl von Transportrobotern (120a,b) auf der Grundlage des einen oder der mehreren Gefahrenbereiche für die Vielzahl von Transportrobotern (120a,b) zu generieren.

10. System (100) zum Betreiben einer Vielzahl von Transportrobotern (120a,b), wobei das System (100) umfasst:
eine Vielzahl von Transportrobotern (120a,b); und
eine Datenverarbeitungsvorrichtung (110) nach einem der Ansprüche 1 bis 9 zum Steuern der Vielzahl von Transportrobotern (120a,b).

11. System (100) nach Anspruch 10, wobei die Vielzahl von Transportrobotern (120a,b) eine Vielzahl von Sensoreinheiten (130a) umfassen, welche ausgebildet sind, zumindest einen Teil der Vielzahl von Sensordaten zu erfassen.

12. System (100) nach Anspruch 10 oder 11, wobei die Vielzahl von Transportrobotern (120a,b) ein oder mehrere Flurförderzeuge (120a,b), insbesondere einen oder mehrere Gabelstapler (120a,b) umfassen.
